(19) Europäisches Patentamt
European Patent Office
Office européen des brevets

(11) EP 2 562 841 A1

(12) **EUROPEAN PATENT APPLICATION**
published in accordance with Art. 153(4) EPC

(43) Date of publication:
**27.02.2013 Bulletin 2013/09**

(51) Int Cl.:
**H01M 2/02** (2006.01)   **H01G 9/155** (0000.00)

(21) Application number: **11771881.7**

(22) Date of filing: **07.04.2011**

(86) International application number:
**PCT/JP2011/058815**

(87) International publication number:
**WO 2011/132545 (27.10.2011 Gazette 2011/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.04.2010   JP 2010100035**

(71) Applicant: Okura Industrial Co., Ltd.
**Marugame-shi**
**Kagawa 763-8508 (JP)**

(72) Inventors:
• **TAKAO, Naoki**
  **Marugame-shi**
  **Kagawa 763-8508 (JP)**
• **SENOO, Yasunori**
  **Marugame-shi**
  **Kagawa 763-8508 (JP)**
• **ORIHARA, Masanao**
  **Marugame-shi**
  **Kagawa 763-8508 (JP)**
• **OYAMA, Masamichi**
  **Marugame-shi**
  **Kagawa 763-8508 (JP)**
• **KOUZAI, Yukio**
  **Marugame-shi**
  **Kagawa 763-8508 (JP)**

(74) Representative: **Mai, Dörr, Besier**
**Patentanwälte**
**Steuerberater/Wirtschaftsprüfer**
**John-F.-Kennedy-Straße 4**
**65189 Wiesbaden (DE)**

(54) **OUTER PACKAGING MATERIAL FOR BATTERY OR CAPACITOR, AND PROCESS FOR PRODUCTION THEREOF**

(57)   [Problem]
To provide an outer packaging material for a battery or capacitor which includes a base layer, a barrier layer, an adhesive layer and a sealant layer that are sequentially laminated and which has high adhesion between the barrier layer and the adhesive layer and a high moisture barrier property.
[Means for Solution]
An outer packaging material for a battery or capacitor, including a base layer, a barrier layer, an adhesive layer and a sealant layer which are sequentially laminated, the adhesive layer including a maleic anhydride-modified polypropylene, wherein $\alpha$ and $\beta$, defined below, satisfy all the following conditions: $\alpha \geq 0.09$; $\beta \geq 10$; and $\alpha\beta \leq 2.0$; wherein $\alpha$ represents a ratio ($A_{1790}/A_{840}$) of a peak height ($A_{1790}$) at 1790 cm$^{-1}$ to a peak height ($A_{840}$) at 840 cm$^{-1}$ in infrared absorption spectrum of the maleic anhydride-modified polypropylene and $\beta$ represents a thickness of the adhesive layer in $\mu$m.

FIG. 1

**Description**

TECHNICAL FIELD

The present invention relates to an outer packaging material for a battery, such as a lithium ion battery or lithium polymer battery, or a capacitor and, more specifically, to a film-type outer packaging material for a thin battery or capacitor, and to a process for producing same.

BACKGROUND ART

As an outer packaging material for thin batteries and capacitors, which are recently being developed in a remarkable manner, an outer packaging material having a base layer, a barrier layer, an adhesive layer and a sealant layer which are laminated in this order is known. For example, an outer packaging material disclosed in Patent Document 1 is composed of a base layer of a heat-resistant biaxially-oriented film, a barrier layer of an aluminum foil, a sealant layer of a polypropylene (which is hereinafter referred to as "PP"), and has an adhesive layer of a maleic anhydride-modified polypropylene (which is hereinafter referred to as "MAH-modified PP") between the barrier layer and the sealant layer. The outer packaging material disclosed in Patent Document 1 is provided with electrolyte-resisting properties and solvent resistance by the MAH-modified PP. However, the adhesion between the barrier layer and the MAH-modified PP layer is not necessarily sufficient, because the MAH-modified PP is as thin as 1 $\mu$m as seen in Example 1.

An outer packaging material disclosed in Patent Document 2 has a base layer of a stretched nylon film, a barrier layer of an aluminum foil, an adhesive layer of an MAH-modified PP, and a sealant layer of an unstretched PP. The adhesion strength between the barrier layer and the adhesive layer is higher than that in the outer packaging material of Patent Document 1, because the adhesive layer of the outer packaging material has a thickness of approximately 15 to 20 $\mu$m. However, the MAH-modified PP of the adhesive layer has a low degree of modification and the adhesion strength needs further improvement.

The present inventors have examined the influence of change in the degree of modification on the outer packaging material by varying the degree of modification of the MAH-modified PP used for the adhesive layer and found that as the degree of modification is increased, the adhesion between the barrier layer and the adhesive layer improves but, at the same time, the moisture barrier property decreases. It is inferred that this is because, as the degree of modification of the MAH-modified PP for the adhesive layer is increased, the proportion of polar groups in the adhesive layer increases, allowing easy penetration of moisture through end faces of the adhesive layer.

The moisture barrier property is one of important properties which an outer packaging material for a battery or capacitor is required to satisfy. When an outer packaging material has a low moisture barrier property, moisture penetrates into the battery or capacitor and reacts with the electrolytic solution therein to form hydrofluoric acid. The generation of hydrofluoric acid may increase the pressure in the battery to cause separation of sealed portions. In addition, when the hydrofluoric acid reaches the barrier layer through the sealant layer or adhesive layer, a surface of the barrier layer is corroded, which leads to a deterioration in the performance of the battery or capacitor.

PRIOR ART DOCUMENT:

Patent Document

Patent Document 1: JP-A-2001-102011
Patent Document 2: JP-A-2005-216707

DISCLOSURE OF THE INVENTION

Problems to be Solved by the Invention:

It is, therefore, an object of the present invention to provide an outer packaging material for a battery or capacitor (which is hereinafter referred to as "outer packaging material") which includes a base layer, a barrier layer, an adhesive layer and a sealant layer that are sequentially laminated and which has high adhesion between the barrier layer and the adhesive layer and a high moisture barrier property. Means for Solving the Problems:

In accordance with the present invention, there is provided, as means for solving the above problems, an outer packaging material for a battery or capacitor, including a base layer, a barrier layer, an adhesive layer and a sealant layer which are sequentially laminated, the barrier layer including a metal foil, the adhesive layer including a maleic anhydride-modified polypropylene, the sealant layer including a polypropylene,
wherein α and β, defined below, satisfy all the following inequalities (1) to (3);

$$\alpha \geq 0.09 \qquad (1)$$

$$\beta \geq 10 \qquad (2)$$

$$\alpha\beta \leq 2.0 \qquad (3)$$

wherein α represents a ratio ($A_{1790}/A_{840}$) of a peak height ($A_{1790}$) at 1790 cm$^{-1}$ to a peak height ($A_{840}$) at 840 cm$^{-1}$ in infrared absorption spectrum of the maleic anhydride-modified polypropylene forming the adhesive layer and β represents a thickness of the adhesive layer in μm.
Also provided is the outer packaging material for a battery or capacitor, wherein the base layer includes a biaxially-oriented polyester film.
Also provided is the outer packaging material for a battery or capacitor, wherein the base layer includes a biaxially-oriented nylon film.
Also provided is the outer packaging material for a battery or capacitor, wherein the base layer includes a two-layer film obtained by laminating a biaxially-oriented polyester film and a biaxially-oriented nylon film.
Also provided is the outer packaging material for a battery or capacitor, wherein the barrier layer includes an aluminum foil.
Also provided is a process for the production of the outer packaging material for a battery or capacitor, including coextruding the maleic anhydride-modified polypropylene and polypropylene into a film to obtain a two-layer film having the adhesive layer of the maleic anhydride-modified polypropylene and the sealant layer of the polypropylene, and bonding the barrier layer including a metal foil to the adhesive layer side of the two-layer film.

Effect of the Invention:

The outer packaging material according to the present invention, in which α ≥ 0.09 and β ≥ 10, wherein α represents the ratio ($A_{1790}/A_{840}$) of the height of peak at 1790 cm$^{-1}$ ($A_{1790}$) to the height of peak at 840 cm$^{-1}$ ($A_{840}$) in infrared absorption spectrum of the MAH-modified PP forming the adhesive layer and β represents the thickness of the adhesive layer in μm, has high adhesion between the barrier layer and the adhesive layer. In addition, the outer packaging material according to the present invention, in which αβ ≤ 2.0, has a high moisture barrier property.

BRIEF DESCRIPTION OF THE DRAWINGS

   FIG. 1 is a schematic cross-sectional view of one embodiment of an outer packaging material according to the present invention.
   FIG. 2 shows graphs of equations α = 0.09, β = 10 and αβ = 2.0.

EMBODIMENTS OF THE INVENTION

While description is hereinafter made of an outer packaging material according to the present invention with reference to an embodiment thereof, the present invention is not limited to the embodiment.

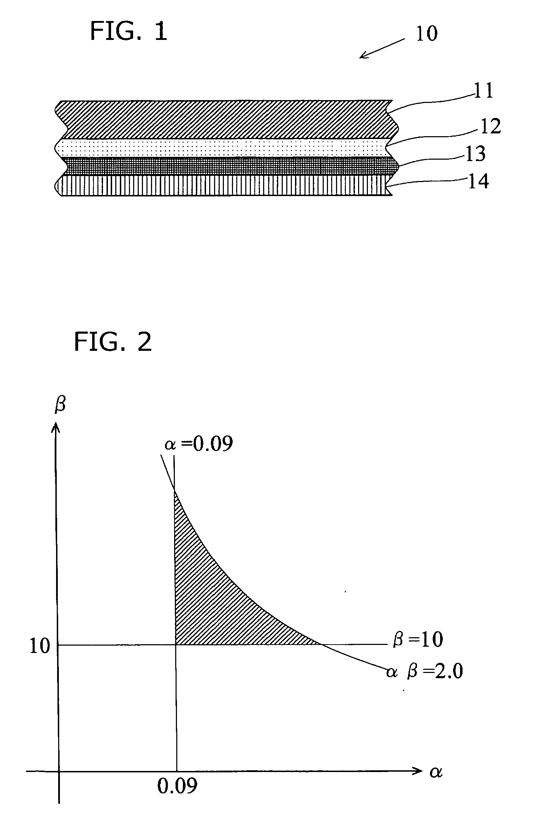

FIG. 1 is a schematic cross-sectional view showing an outer packaging material according to the present invention. The outer packaging material has a base layer 11, a barrier layer 12, an adhesive layer 13, and a sealant layer 14 from one surface thereof to the other.
The base layer 11 is a layer which, when the outer packaging material according to the present invention is used as an outer packaging material of a battery or capacitor, forms the exterior of the battery or capacitor, and is required to have a certain degree of strength and insulating capacity. As the base layer 11, a biaxially-oriented polyester film or biaxially-oriented nylon film may be used. A biaxially-oriented polyester film may be produced by forming a resin, such as polyethylene terephthalate, polybutylene terephthalate, polyethylene naphthalate or a copolymerized polyester, e.g., an ethylene terephthalate/ethylene isophthalate copolymer or butylene terephthalate/butylene isophthalate copolymer, into a film by a well-known film-formation method, such as a T-die extrusion molding method or inflation extrusion molding method, and then stretching the film in two directions, longitudinally and transversely. A biaxially-oriented nylon film may be obtained by forming a resin, such as nylon 6, nylon 6,6, a copolymer of nylon 6,6 and nylon 6, nylon 6,10, polymetaxylylene adipamide (MXD6), into a film by a well-known method as in the above method and then biaxially stretching the film.

A two-layer film obtained by laminating a biaxially-oriented polyester film and a biaxially-oriented nylon film has a good balance between strength and stretch and is therefore especially suitable as the base layer 11. In this case, however, the outermost layer of the base layer is preferably formed of the biaxially-oriented polyester film with the biaxially-oriented nylon film facing the barrier layer because a nylon resin easily degrades when in contact with an electrolytic solution. The two-layer base layer 11 composed of a biaxially-oriented polyester film and a biaxially-oriented nylon film may be obtained by producing the films separately by a method as described above and then bonding the films to each other with an adhesive, or by producing a two-layer film by a co-extrusion molding method and biaxially stretching the laminate film.

The barrier layer 12 is a layer for preventing water vapor from penetrating from outside into the battery. As the barrier layer 12, a foil of a metal, such as aluminum, nickel or stainless, may be used, and the use of an aluminum foil is preferred from economical point of view. It is known that the addition of a small amount of iron to an aluminum foil improves its ductility and reduces generation of pinholes when it is bent. Thus, when an aluminum foil is used as the barrier layer 12, the aluminum foil preferably contains 0.3 to 9.0% by weight, preferably 0.7 to 2.0% by weight, of iron. In addition, because the flexibility, toughness and hardness of an aluminum foil produced by cold rolling vary depending on the annealing (what is called softening treatment) conditions, the use of a partially or fully annealed aluminum foil which tends to be soft, rather than a hardening-treated product which has not been subjected to annealing, is preferred in the present invention. The barrier layer 12 preferably has a thickness of 15 $\mu$m or greater, especially preferably 20 $\mu$m or greater, from the viewpoint of moisture barrier property and resistance to pinholes. When the resistance to impact and piercing is regarded as particularly important, the barrier layer 12 preferably has a thickness of approximately 80 to 120 $\mu$m.

The surfaces of a metal foil (especially, an aluminum foil) are liable to be corroded by acidic substances. Thus, the barrier layer 12 has been preferably subjected to an acid-resistant treatment. When the barrier layer 12 has been subjected to an acid-resistant treatment, the barrier layer 12 is prevented from being corroded even when hydrofluoric acid is generated in the battery and reaches the barrier layer 12. In addition, an acid-resistant treatment is also effective in improving the adhesion between the barrier layer 12 and the adhesive layer 13. While a chromate treatment is a common acid-resistant treatment method, a non-chromate treatment, such as boehmite treatment, parkerizing treatment or triazine thiol treatment, may be used. The acid-resistant treatment may be performed only on the adhesive layer 13 side surface of the barrier layer 12 or on both surfaces of the barrier layer 12.

The adhesive layer 13 is next described. The adhesive layer 13 of the outer packaging material according to the present invention is composed of an MAH-modified PP. Specifically, the adhesive layer 13 of the outer packaging material according to the present invention is composed of an MAH-modified PP having a higher degree of modification than a MAH-modified PP used conventionally in an outer packaging material for a battery or capacitor. More specifically, when a ratio ($A_{1790}/A_{840}$) of the peak height ($A_{1790}$) at 1790 cm$^{-1}$ derived from MAH to the peak height ($A_{840}$) at 840 cm$^{-1}$ derived from polypropylene in infrared absorption spectrum (absorbance), which is an index that indicates the degree of modification of MAH-modified PP, is represented by $\alpha$, $\alpha$ is approximately 0.008 to 0.071 for an MAH-modified PP used conventionally for an outer packaging material for battery or capacitor. On the other hand, in the outer packaging material according to the present invention, $\alpha$ of the MAH-modified PP for use in the adhesive layer thereof is 0.09 or more, preferably $\alpha$ is 0.10 or more. An adhesive layer of an MAH-modified PP with $\alpha < 0.09$ does not have sufficient adhesion to the barrier layer. It should be noted that the position of infrared absorption spectrum may have a margin of error of approximately $\pm 1$ cm$^{-1}$ depending on the conditions during measurement.

The present inventors have also found that even when an MAH-modified PP with $\alpha \geq 0.09$ is used as the adhesive layer, the adhesive layer cannot have sufficient adhesion when it is too thin, and that the adhesive layer should have a thickness $\beta$ of 10 $\mu$m or greater, preferably 15 $\mu$m or greater. Incidentally, it is when the thickness of the adhesive layer is up to approximately 30 $\mu$m that the adhesion of the adhesive layer varies depending on its thickness. The thickness of the adhesive layer has little influence on its adhesion when the thickness exceeds 30 $\mu$m.

To increase the adhesion between the barrier layer 12 and the adhesive layer 13, the greater $\alpha$ is, the better, and $\beta$ is preferably increased up to approximately 30 $\mu$m. However, as both $\alpha$ and $\beta$ are greater, moisture tends to penetrate through end faces of the adhesive layer. Thus, the present inventors conducted studies for an outer packaging material suitable for the application of a battery or capacitor in terms of moisture barrier property, and, consequently, found that a good moisture barrier property can be obtained when $\alpha\beta$ is 2.0 or less, especially, when $\alpha\beta$ is less than 1.7. FIG. 2 shows graphs of equations $\alpha = 0.09$, 13 = 10 and $\alpha\beta = 2.0$. The area where $\alpha \geq 0.09$, $\beta \geq 10$ and $\alpha\beta \geq 2.0$ are all satisfied is as indicated by a hatched pattern. An outer packaging material with $\alpha < 0.09$ or $\beta < 10$ has low adhesion and an outer packaging material with $\alpha\beta > 2$ has a poor moisture barrier property.

The sealant layer 14 is next described. The sealant layer 14 is composed of a PP which has good adhesion to the MAH-modified PP and high heat-sealability. Examples of resins for forming the PP include polypropylene resins, such as homopolymers of propylene, propylene-ethylene copolymers, and propylene-ethylene-butene copolymers. The thickness of the sealant layer 14 is not specifically limited but a thickness of 10 to 130 $\mu$m is appropriate. The sealant layer 14 may not exhibit good sealability when the thickness is 10 $\mu$m or smaller, and does not show much improvement in sealing strength when the thickness is greater than 130 $\mu$m.

A process for the production of an outer packaging material 10 according to the present invention is next described. Generally, there are two production methods as described below. A first production method includes bonding the base layer 11 to one side of the barrier layer 12 and then bonding the sealant layer 14 to the other side of the barrier layer 12 via the adhesive layer 13. A second production method includes bonding the sealant layer 14 to one side of the barrier layer 12 via the adhesive layer 13 and then bonding the base layer 11 to the other side of the barrier layer 12. One common way to bond the sealant layer 14 to the barrier layer 12 via the adhesive layer 13 is to use what is called an extrusion lamination method, in other words, to prepare the barrier layer 12 and the sealant layer 14, both in the form of a film, in advance and melt-extrude the MAH-modified PP to form the adhesive layer 13 between the barrier layer 12 and the sealant layer 14. However, because the MAH-modified PP of the present invention has high adhesion to the barrier layer 12, it is possible to adopt a method including first coextruding the MAH-modified PP and PP into a film to produce a laminate of the adhesive layer 13 and the sealant layer 14, and then thermocompression bonding the barrier layer 12 to the adhesive layer 13 side of the laminate.

In other words, the outer packaging material 10 may be produced by forming the MAH-modified PP and PP into a film by a co-extrusion method to form a two-layer film having the adhesive layer 13 and the sealant layer 14, bonding the barrier layer 12 to the adhesive layer 13 side of the two-layer film, and bonding the base layer 11 to the barrier layer. Alternatively, the outer packaging material 10 may be produced by forming the MAH-modified PP and PP into a film by a co-extrusion method to form a two-layer film having the adhesive layer 13 and the sealant layer 14, producing a laminate by bonding the barrier layer 12 and the base layer 11 to each other, and bonding the adhesive layer 13 of the two-layer film having the adhesive layer 13 and the sealant layer 14 to the barrier layer 12 of the laminate having the barrier layer 12 and the base layer 11.

EXAMPLE

An adhesion test and a moisture barrier property test were conducted to confirm the effects of the present invention. In the adhesion test and moisture barrier property test, the MAH-modified PP1 to MAH-modified PP8 as shown in Table 1 were used.

[Table 1]

| | Melting point | MI | $A_{1790}$ | $A_{840}$ | $\alpha$ ($A_{1790}/A_{840}$) |
|---|---|---|---|---|---|
| MAH-modified PP1 | 122 | 3.6 | 0.088 | 0.789 | 0.112 |
| MAH-modified PP2 | 134 | 3.2 | 0.013 | 0.185 | 0.070 |
| MAH-modified PP3 | 168 | 5.0 | 0.053 | 0.887 | 0.060 |
| MAH-modified PP4 | 170 | 7.8 | 0.026 | 0.486 | 0.053 |
| MAH-modified PP5 | 144 | 3.0 | 0.038 | 0.761 | 0.050 |
| MAH-modified PP6 | 125 | 1.6 | 0.010 | 0.270 | 0.037 |
| MAH-modified PP7 | 143 | 3.6 | 0.004 | 0.350 | 0.011 |
| MAH-modified PP8 | 144 | 20 | 0.004 | 0.402 | 0.010 |

[Adhesion Test]

To measure the adhesion between a barrier layer and adhesive layers, barrier layers of an aluminum foil (40 $\mu$m) with a chromate-treated surface and two-layer test films 1 to 12, each having an adhesive layer and a sealant layer, were prepared. The test films 1 to 12 were produced by a T-die co-extrusion method using the MAH-modified PP1 to MAH-modified PP8 shown in Table 1 as the adhesive layers and a polypropylene as the sealant layers. At this time, the thickness of the adhesive layers was varied as shown in Table 2, and the sealant layers had a thickness of 30 $\mu$m. Then, sealing was conducted with a sealer heated to 190°C at a sealing pressure of 1 MPa for three seconds to seal a barrier layer and each two-layer film having an adhesive layer and a sealant layer such that the chromate-treated surface of the barrier layer was in contact with the adhesive layer. After that, the adhesion strength at which the sealed portion was separated was measured with an autograph, and the obtained value was defined as the adhesion between the barrier layer and the adhesive layer. The results are summarized in Table 2.

[Table 2]

|  | Adhesive layer | $\alpha$ | $\beta$ ($\mu$m) | Adhesion strength (N/mm) |
|---|---|---|---|---|
| Test film 1 | MAH-modified PP1 | 0.112 | 5 | 4.8 |
| Test film 2 | MAH-modified PP1 | 0.112 | 10 | 9.7 |
| Test film 3 | MAH-modified PP1 | 0.112 | 20 | 10.2 |
| Test film 4 | MAH-modified PP2 | 0.070 | 10 | 5.0 |
| Test film 5 | MAH-modified PP2 | 0.070 | 20 | 5.5 |
| Test film 6 | MAH-modified PP2 | 0.070 | 30 | 5.6 |
| Test film 7 | MAH-modified PP3 | 0.060 | 10 | 4.8 |
| Test film 8 | MAH-modified PP4 | 0.053 | 10 | 4.0 |
| Test film 9 | MAH-modified PP5 | 0.050 | 10 | 3.8 |
| Test film 10 | MAH-modified PP6 | 0.037 | 10 | 3.5 |
| Test film 11 | MAH-modified PP7 | 0.011 | 10 | 2.1 |
| Test film 12 | MAH-modified PP8 | 0.010 | 10 | 1.9 |

An outer packaging material is superior as the adhesion between the barrier layer and the adhesive layer is higher. When an outer packaging material is used as an outer packaging material of a battery or capacitor, the adhesion is preferably 9.0 N/mm or higher. It is therefore obvious from Table 2 that $\alpha \geq 0.09$ and $\beta \geq 10$ are required to obtain high adhesion strength.

[Moisture Barrier Property Test]

To measure the moisture barrier property of adhesive layers, test films 13 to 17 were produced by bonding barrier layers of an aluminum foil (40 $\mu$m) with a chromate-treated surface to the test films 2 to 6. The bonding was carried out such that the chromate treated surface of the aluminum foils was in contact with the adhesive layer of the test films 2 to 6 by applying a mechanical pressure of 50 kgf/cm$^2$ for 10 seconds at a temperature of 220°C with a middle-sized pressing machine.

Then, the obtained three-layer films, each having a barrier layer, an adhesive layer and a sealant layer which were sequentially laminated, were cut into test pieces with a size of 35 mm x 50 mm. Two identical test pieces were prepared and stacked such that their sealant layers were in contact with each other, and the peripheries of the laminate were sealed at a temperature of 190°C and a pressure 1MPa to produce a package. At this time, the package was filled with 1 ml of a filling fluid (propylene carbonate).

The obtained packages were allowed to stand still in an environment at a room temperature of 80°C and a humidity of 90% for one week. Then, the filling fluid was taken out and the water content contained in the propylene carbonate was measured by Karl Fischer titration. The results are summarized in Table 3.

[Table 3]

|  | Adhesive layer/ sealant layer | $\alpha$ | $\beta$ | $\alpha\beta$ | Water content |
|---|---|---|---|---|---|
| Test film 13 | Test film 2 (MAH-modified PP1/PP) | 0.112 | 10 | 1.12 | 38 |
| Test film 14 | Test film 3 (MAH-modified PP1/PP) | 0.112 | 20 | 2.24 | 78 |
| Test film 15 | Test film 4 (MAH-modified PP2/PP) | 0.070 | 10 | 0.7 | 30 |
| Test film 16 | Test film 5 (MAH-modified PP2/PP) | 0.070 | 20 | 1.4 | 55 |
| Test film 17 | Test film 6 (MAH-modified PP2/PP) | 0.070 | 30 | 2.1 | 71 |

An outer packaging material used for the application of a battery or capacitor must have a high moisture barrier property. Specifically, the water content as measured in the above test is preferably 60 ppm or less. The above test results indicate that the water content falls within the target range when $\alpha\beta \leq 2$. The test films 15 and 16 using the test films 4 and 5, respectively, have a high moisture barrier property but, according to the previous adhesion test results, have insufficient adhesion to the barrier layer.

[Example 1]

First, a biaxially-oriented polyethylene terephthalate film and a biaxially-oriented nylon film were bonded to each other by a dry laminate method to produce a base layer (PET/NY). Next, an aluminum foil with a chromate-treated surface was prepared as a barrier layer. The base layer and the barrier layer were laminated (PET/NY/AL) with an adhesive such that the non-chromate-treated surface of the aluminum foil faced the biaxially-oriented nylon film of the base layer. Then, a two-layer film composed of the MAH-modified PP1 ($\alpha$ = 0.112) shown in Table 1 and a PP was produced by a T-die co-extrusion method to obtain a two-layer film having an adhesive layer of the MAH-modified PP1 and a sealant layer of a PP. Finally, the barrier layer (AL) of the base layer/barrier layer laminate film (PET/NY/AL) and the adhesive layer/sealant layer laminate film (MAH-modified PP1/PP) were laminated such that the barrier layer (AL) was in contact with the adhesive layer (MAH-modified PP1) to produce an outer packaging material (PET/NY/AUMAH-modified PP1/PP). The thicknesses of the layers were as follows; PET: 9 $\mu$m, NY: 15 $\mu$m, AL: 40 $\mu$m, MAH-modified PP1: 17 $\mu$m, and PP: 33 $\mu$m.
The obtained film was formed into a tray shape by a deep-drawing method, and a battery body was inserted into the tray to produce a lithium ion battery. Even after being used for a long period of time, the lithium ion battery did not have any separation between the barrier layer and the adhesive layer and showed no signs of moisture penetration.

INDUSTRIAL APPLICABILITY:

The present invention can be used as an outer packaging material for a battery, such as a lithium ion battery or lithium polymer, or a capacitor.

DESCRIPTION OF REFERENCE NUMERALS:

10: outer packaging material
11: base layer
12: barrier layer
13: adhesive layer
14: sealant layer

**Claims**

1. An outer packaging material for a battery or capacitor, comprising a base layer, a barrier layer, an adhesive layer and a sealant layer which are sequentially laminated,
the barrier layer including a metal foil, the adhesive layer including a maleic anhydride-modified polypropylene, the sealant layer including a polypropylene,
wherein $\alpha$ and $\beta$, defined below, satisfy all the following inequalities (1) to (3);

$$\alpha \geq 0.09 \qquad (1)$$

$$\beta \geq 10 \qquad (2)$$

$$\alpha\beta \leq 2.0 \qquad (3)$$

wherein $\alpha$ represents a ratio ($A_{1790}/A_{840}$) of a peak height ($A_{1790}$) at 1790 cm$^{-1}$ to a peak height ($A_{840}$) at 840 cm$^{-1}$

in infrared absorption spectrum of the maleic anhydride-modified polypropylene forming the adhesive layer and $\beta$ represents a thickness of the adhesive layer in $\mu$m.

2. The outer packaging material for a battery or capacitor according to claim 1,
   wherein the base layer includes a biaxially-oriented polyester film.

3. The outer packaging material for a battery or capacitor according to claim 1,
   wherein the base layer includes a biaxially-oriented nylon film.

4. The outer packaging material for a battery or capacitor according to claim 1,
   wherein the base layer includes a two-layer film obtained by laminating a biaxially-oriented polyester film and a biaxially-oriented nylon film.

5. A process for producing an outer packaging material for a battery or capacitor,
   the outer packaging material comprising a base layer, a barrier layer, an adhesive layer and a sealant layer which are sequentially laminated,
   the barrier layer including a metal foil, the adhesive layer including a maleic anhydride-modified polypropylene, the sealant layer including a polypropylene,
   wherein $\alpha$ and $\beta$, defined below, satisfy all the following inequalities (1) to (3);

$$\alpha \geq 0.09 \qquad (1)$$

$$\beta \geq 10 \qquad (2)$$

$$\alpha\beta \leq 2.0 \qquad (3)$$

   wherein $\alpha$ represents a ratio ($A_{1790}/A_{840}$) of a peak height ($A_{1790}$) at 1790 cm$^{-1}$ to a peak height ($A_{840}$) at 840 cm$^{-1}$ in infrared absorption spectrum of the maleic anhydride-modified polypropylene forming the adhesive layer and $\beta$ represents a thickness of the adhesive layer in $\mu$m,
   said process being **characterized by** comprising forming the maleic anhydride-modified polypropylene and the polypropylene into a film by a co-extrusion method to obtain a two-layer film having the adhesive layer and the sealant layer, then bonding the barrier layer to the adhesive layer side of the two-layer film, and bonding the base layer to the barrier layer.

6. The production process according to claim 5, wherein the base layer includes a biaxially-oriented polyester film.

7. The production process according to claim 5, wherein the base layer includes a biaxially-oriented nylon film.

8. The production process according to claim 5, wherein the base layer includes a two-layer film obtained by laminating a biaxially-oriented polyester film and a biaxially-oriented nylon film.

9. The production process according to claim 8,
   the process being for the production of an outer packaging material for a battery or capacitor, the outer packaging material comprising a base layer, a barrier layer, an adhesive layer and a sealant layer which are sequentially laminated,
   the barrier layer including a metal foil, the adhesive layer including a maleic anhydride-modified polypropylene, the sealant layer including a polypropylene, and
   wherein $\alpha$ and $\beta$, defined below, satisfy all the following inequalities (1) to (3);
   wherein $\alpha$ represents a ratio ($A_{1790}/A_{840}$) of a peak height ($A_{1790}$) at 1790 cm$^{-1}$ to a peak height ($A_{840}$) at 840 cm$^{-1}$ in infrared absorption spectrum of the maleic anhydride-modified polypropylene forming the adhesive layer and $\beta$ represents a thickness of the adhesive layer in $\mu$m,
   said process being **characterized by** comprising forming the maleic anhydride-modified polypropylene and the polypropylene into a film by a co-extrusion molding process to obtain a two-layer film having the adhesive layer and the sealant layer, bonding the barrier layer to the base layer to produce a laminate, and then bonding the adhesive layer of the two-layer film having the adhesive layer and the sealant layer to the barrier layer of the laminate having the barrier layer and the base layer.

10. The production process according to claim 9, wherein the base layer includes a biaxially-oriented polyester film.

11. The production process according to claim 9, wherein the base layer includes a biaxially-oriented nylon film.

12. The production process according to claim 9, wherein the base layer includes a two-layer film obtained by laminating a biaxially-oriented polyester film and a biaxially-oriented nylon film.1

FIG. 1

10

11
12
13
14

FIG. 2

$\beta$

$\alpha = 0.09$

$\alpha\,\beta = 2.0$

$\beta = 10$

10

0.09

$\alpha$

## INTERNATIONAL SEARCH REPORT

| | |
|---|---|
| | International application No. |
| | PCT/JP2011/058815 |

A. CLASSIFICATION OF SUBJECT MATTER
*H01M2/02*(2006.01)i, *H01G9/155*(2006.01)i

According to International Patent Classification (IPC) or to both national classification and IPC

B. FIELDS SEARCHED

Minimum documentation searched (classification system followed by classification symbols)
H01M2/02, H01G9/155

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2002-198013 A  (Mitsubishi Aluminum Co., Ltd.), 12 July 2002 (12.07.2002), entire text (Family: none) | 1-12 |
| A | JP 2008-77930 A  (Toppan Printing Co., Ltd.), 03 April 2008 (03.04.2008), entire text; fig. 1 (Family: none) | 1-12 |
| A | JP 2002-50325 A  (Dainippon Printing Co., Ltd.), 15 February 2002 (15.02.2002), entire text (Family: none) | 1-12 |

☒ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 June, 2011 (10.06.11) | 21 June, 2011 (21.06.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2011/058815 |

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2008/143089 A1  (Showa Denko Packaging Co.), 27 November 2008 (27.11.2008), entire text; fig. 1, 2 & JP 2008-288117 A        & US 2010/0227213 A & DE 112008001000 T      & CN 101663774 A & KR 10-2010-0022014 A | 1-12 |
| A | WO 2006/126370 A1  (Showa Denko Packaging Co.), 30 November 2006 (30.11.2006), entire text; fig. 1 to 4 & JP 2006-331897 A        & US 2009/0130407 A1 & DE 112006001372 T      & KR 10-2008-0021612 A & CN 101185180 A | 1-12 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001102011 A
- JP 2005216707 A